# EUROPEAN PATENT SPECIFICATION

(11) **EP 3 772 700 B1**
(45) Date of publication and mention of the grant of the patent: **30.03.2022**
(21) Application number: 19210635.9
(22) Date of filing: 21.11.2019
(51) Int. Cl.: G06F 21/60, G06N 3/02, H04L 29/06

(54) **METHOD AND DEVICE FOR ENCRYPTING MODEL OF NEURAL NETWORK, AND STORAGE MEDIUM**
VERFAHREN UND VORRICHTUNG ZUR VERSCHLÜSSELUNG EINES MODELLS EINES NEURONALEN NETZWERKS UND SPEICHERMEDIUM
PROCÉDÉ ET DISPOSITIF DE CRYPTAGE DE MODÈLE D'UN RÉSEAU NEURONAL ET SUPPORT D'ENREGISTREMENT

(30) Priority: 09.08.2019 CN 201910735898
(43) Date of publication of application: 10.02.2021
(73) Proprietor: Beijing Xiaomi Mobile Software Co., Ltd., Beijing 100085 (CN)
(72) Inventor: LIU, Qi, Haidian District, Beijing 100085 (CN); YE, Jianwu, Haidian District, Beijing 100085 (CN); HE, Liangliang, Haidian District, Beijing 100085 (CN)
(74) Representative: Gevers Patents

(56) References cited:
- CN-A- 110 062 014
- LAURENT GOMEZ ET AL: "Intellectual Property Protection for Distributed Neural Networks - Towards Confidentiality of Data, Model, and Inference :", PROCEEDINGS OF THE 15TH INTERNATIONAL JOINT CONFERENCE ON E-BUSINESS AND TELECOMMUNICATIONS, 1 January 2018 (2018-01-01), pages 147-154, XP055682314, DOI: 10.5220/0006854701470154 ISBN: 978-989-7583-19-3
- Lukas Rist: "Encrypt your Machine Learning How Practical is Homomorphic Encryption for Machine Learning?", , 8 January 2018 (2018-01-08), XP055682905, medium.com Retrieved from the Internet: URL:https://medium.com/corti-ai/encrypt-yo ur-machine-learning-12b113c879d6 [retrieved on 2020-04-03]
- Arthur Arnx: "First neural network for beginners explained (with code)", , 13 January 2019 (2019-01-13), XP055682928, Retrieved from the Internet: URL:https://towardsdatascience.com/first-n eural-network-for-beginners-explained-with -code-4cfd37e06eaf [retrieved on 2020-04-03]

## Description

### TECHNICAL FIELD

The subject disclosure relates to information processing, and in particular to a method and device for encrypting a neural network model, and a storage medium.

### BACKGROUND

A neural network model is a mathematical model simulating a real neural network of a human being, and may apply widely to fields such as system recognition, mode identification, artificial intelligence, etc. As neural network technology continues to mature, a neural network model has been applied to application (APP) products of numerous kinds of User Equipment (UE). Application of a neural network model often involves an issue of security. Model information may tend to be given away when a neural network model is deployed at a UE side. Therefore, a major topic in application of a neural network model is to find a solution for encrypting the neural network model.

CN 110 062 014 A discloses encryption and decryption of a network model. The encryption includes extracting a network structure definition file in a network model file; encrypting the network structure definition file through a first key and an encryption algorithm; extracting a network variable name file in the network model file; encrypting the network variable name file through a second key and the encryption algorithm; generating an encrypted network model file according to the encrypted network structure definition file and the encrypted network variable name file.

Laurent Gomez et al., "Intellectual Property Protection for Distributed Neural Networks Towards Confidentiality of Data, Model, and Inference", Proceedings of the 15th International Joint Conference on e-Business and Telecommunications, 2018, pages 147-154, discloses leveraging Fully Homomorphic Encryption (FHE) to protect both trained NN based software, input data and output inferences. An NN model-agnostic approach is outlined approximating and decomposing the NN operations into linearized transformations while employing a Single Instruction Multiple Data (SIMD) for vectorizing operations.

Lukas Rist, "Encrypt your Machine Learning; How Practical is Homomorphic Encryption for Machine Learning?", retrieved from internet, discloses machine learning model encryption with FHE.

### SUMMARY

Embodiments herein provide a method and device for encrypting a neural network model, a storage medium, and a computer program, in accordance with claims which follow.

Other features and advantages of embodiments herein may become clear with elaboration made below, or may be learned partially by practicing embodiments herein.

The features of the method and device according to the subject disclosure are defined in the independent claims, and the preferable features according to the subject invention are defined in the dependent claims.

According to an aspect of embodiments herein, a method for encrypting a neural network model includes:
acquiring an encrypted model file by encrypting at least a part of model information in an original model file describing a target neural network model; network model, and at least one generalized data class associated with the model information contained in the target neural network model;
creating, according to the encrypted model file, a model object associated with the target neural network model by calling a model constructing function associated with the generalized model class;
creating, according to the encrypted model file, a data object associated with the model information by calling at least one data constructing function associated with the at least one generalized data class; and
generating, according to the model object and the data object, the model program code describing the target neural network model.

The method may further include:
generating a model library file according to the model program code; and
generating the APP adapted to executing the target neural network model by linking the model library file to an executable file.

The acquiring an encrypted model file by encrypting at least a part of model information in an original model file describing a target neural network model may include:
acquiring the encrypted model file by performing a mapping operation on the at least a part of the model information according to a preset hash function.

According to an aspect of embodiments herein, a device for encrypting a neural network model includes an encrypting module, a code generating module, and a sending module.

The encrypting module is adapted to acquiring an encrypted model file by encrypting at least a part of model information in an original model file describing a target neural network model.

The code generating module is adapted to generating, according to the encrypted model file, a model program code describing the target neural network model.

The sending module is adapted to sending, to a User Equipment (UE) based on a request sent by the UE, an installation package for installing an application (APP), the installation package including the model program code.

The advantages and technical effects of the device herein correspond to those of the method presented above.

The model information may include node information on each node in the target neural network model and a global parameter of the target neural network model.

The node information may include a node identifier of the each node and a node parameter of the each node.

The node parameter may include at least one of a weight parameter of the each node, an input parameter of the each node, an output parameter of the each node, or an operational parameter of the each node.

The code generating module may include a constructing sub-module, a model object creating sub-module, a data object creating sub-module, and a generating sub-module.

The constructing sub-module may be adapted to constructing a generalized model class associated with the target neural network model, and at least one generalized data class associated with the model information contained in the target neural network model.

The model object creating sub-module may be adapted to creating, according to the encrypted model file, a model object associated with the target neural network model by calling a model constructing function associated with the generalized model class.

The data object creating sub-module may be adapted to creating, according to the encrypted model file, a data object associated with the model information by calling at least one data constructing function associated with the at least one generalized data class.

The generating sub-module may be adapted to generating, according to the model object and the data object, the model program code describing the target neural network model.

The device may further include a library generating module and an APP generating module.

The library generating module may be adapted to generating a model library file according to the model program code.

The APP generating module may be adapted to generating the APP adapted to executing the target neural network model by linking the model library file to an executable file.

The encrypting module may include a mapping sub-module.

The mapping sub-module may be adapted to acquiring the encrypted model file by performing a mapping operation on the at least a part of the model information according to a preset hash function.

According to an aspect of embodiments herein, a device for encrypting a neural network model includes at least a processor and memory.

The memory stores an instruction executable by the processor.

When executed by the processor, the instruction implements at least a part of any aforementioned method.

According to an aspect of embodiments herein, a transitory or non-transitory computer-readable storage medium / information medium has stored thereon computer-executable instructions of a computer program that, when executed by a processor, cause the processor to implement at least a part of any aforementioned method.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The options of the method may be determined by computer program instructions.

Consequently, according to an aspect herein, the subject disclosure is further directed to a computer program for executing the options of the method as described above when this program is executed by a computer.

This program can use any programming language and take the form of source code, object code or a code intermediate between source code and object code, such as a partially compiled form, or any other desirable form.

The above general description and elaboration below are but exemplary and explanatory, and do not limit the subject disclosure.

### BRIEF DESCRIPTION OF THE DRAWINGS

A drawing here is incorporated in the subject disclosure, constitutes a part of the subject disclosure, illustrates at least one embodiment according to the subject disclosure, and together with the subject disclosure, serves to explain the principle of the subject disclosure.
FIG. 1 is a flowchart of a method for encrypting a neural network model according to an exemplary embodiment.
FIG. 2 is a diagram of a principle of encrypting a neural network model according to an exemplary embodiment.
FIG. 3 is a diagram of a structure of a device for encrypting a neural network model according to an exemplary embodiment.
FIG. 4 is a block diagram of a physical structure of a device for encrypting a neural network model according to an exemplary embodiment.
FIG. 5 is a block diagram of a physical structure of a UE according to an exemplary embodiment.

### DETAILED DESCRIPTION

Exemplary embodiments (examples of which are illustrated in the accompanying drawings) are elaborated below. The following description refers to the accompanying drawings, in which identical or similar elements in two drawings are denoted by identical reference numerals unless indicated otherwise. The exemplary implementation modes may take on multiple forms, and should not be taken as being limited to examples illustrated herein. Instead, by providing such implementation modes, embodiments herein may become more comprehensive and complete, and comprehensive concept of the exemplary implementation modes may be delivered to those skilled in the art. Implementations set forth in the following exemplary embodiments do not represent all implementations in accordance with the subject disclosure. Rather, they are merely examples of the apparatus and method in accordance with certain aspects herein as recited in the accompanying claims.

A term used in an embodiment herein is merely for describing the embodiment instead of limiting the subject disclosure. A singular form "a" and "the" used in an embodiment herein and the appended claims may also be intended to include a plural form, unless clearly indicated otherwise by context. Further note that a term "and / or" used herein may refer to and contain any combination or all possible combinations of one or more associated listed items.

Note that although a term such as first, second, third may be adopted in an embodiment herein to describe various kinds of information, such information should not be limited to such a term. Such a term is merely for distinguishing information of the same type. For example, without departing from the scope of the embodiments herein, the first information may also be referred to as the second information. Similarly, the second information may also be referred to as the first information. Depending on the context, a "if" as used herein may be interpreted as "when" or "while" or "in response to determining that".

In addition, described characteristics, structures or features may be combined in one or more implementation modes in any proper manner. In the following descriptions, many details are provided to allow a full understanding of embodiments herein. However, those skilled in the art will know that the technical solutions of embodiments herein may be carried out without one or more of the details; alternatively, another method, component, device, option, etc. may be adopted. Under other conditions, no detail of a known structure, method, device, implementation, material or operation may be shown or described to avoid obscuring aspects of embodiments herein.

A block diagram shown in the accompanying drawings may be a functional entity which may not necessarily correspond to a physically or logically independent entity. Such a functional entity may be implemented in form of software, in one or more hardware modules or integrated circuits, or in different networks and /or processor devices and /or microcontroller devices.

In general, a neural network model may be deployed in two modes. One is to deploy a neural network model at a server to provide an online service through a network. The other is to deploy a neural network model at a UE side including a smart UE such as a mobile phone, to execute the model off line using an accelerator at the UE side. When a model is deployed at a UE side, all information on the model may be stored in a model file. Model information may be acquired straightforwardly through the model file, leading to poor security.

A neural network model may be encrypted by at least one of symmetric encryption or asymmetric encryption. A neural network model may be encrypted in two symmetric encryption modes, i.e., stream cipher encryption and block cipher encryption. With stream cipher encryption, one letter or digit may be encrypted at a time. With block cipher encryption, a data block including multiple bits may be encrypted into one unit. Multiple data blocks may have to be filled with plaintext. Block cipher encryption may include a Data Encryption Standard (DES) algorithm, a Triple DES (TDES) algorithm, an Advanced Encryption Standard (AES) algorithm, a Blowfish algorithm, an International Data Encryption Algorithm (IDEA), an RC5 algorithm, an RC6 algorithm, etc.

A system of asymmetric encryption may use a key pair. A key pair may include two keys, i.e., a public key and a private key. A public key may be spread widely. A private key may be known only to an owner. Cipher text may be encrypted using a public key and decrypted by a receiver using a private key. With asymmetric encryption, data are highly encrypted and are unlikely to be cracked straightforwardly, leading to high security, as long as the private key is secured. Asymmetric encryption may include an RSA encryption algorithm, for example.

A key of symmetric encryption, as well as a private key of asymmetric encryption, as mentioned above, will be stored in a code at a UE side, thus posing a potential security issue. Moreover, asymmetric encryption may require complicated decryption, leading to low efficiency.

Exemplary embodiments (examples of which are illustrated in the accompanying drawings) are elaborated below. The following description refers to the accompanying drawings, in which identical or similar elements in two drawings are denoted by identical reference numerals unless indicated otherwise. Implementations set forth in the following exemplary embodiments do not represent all implementations in accordance with the subject disclosure. Rather, they are merely examples of the device and method in accordance with certain aspects herein as recited in the accompanying claims.

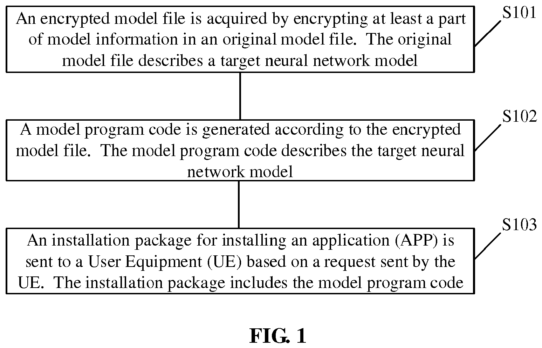

FIG. 1 is a flowchart of a method for encrypting a neural network model according to an exemplary embodiment. As shown in FIG. 1, the method includes at least one option as follows.

In S101, an encrypted model file is acquired by encrypting at least a part of model information in an original model file. The original model file describes a target neural network model.

In S102, a model program code is generated according to the encrypted model file. The model program code describes the target neural network model.

In SI03, an installation package for installing an application (APP) is sent to a User Equipment (UE) based on a request sent by the UE. The installation package includes the model program code.

Encryption in S101 and S102 may be executed off line by a server. After encryption, an installation package for installing an APP, which includes a model program code, may be generated, so as to be downloaded and used by a UE. When a request (including, but not limited to, a download request, an update request, or the like, for example) sent by a UE is received, the server may send the installation package for installing the APP to the UE. The UE may install and run the APP to implement a function of the target neural network model.

The encrypted model file may be acquired by converting the model information into encrypted model information by encrypting a part or all of the model information in the original neural network model using an encryption algorithm. The model information may include node information on each node in the target neural network model. The model information may include a global parameter of the entire model file. The node information may include a node identifier of the each node, a node parameter of the each node, etc. The node parameter may be information such as a weight of the node, an operational parameter of the each node, an attribute parameter of the node, input to the node, output of the node, etc. Information on the input to the node and the output of the node may reflect the structure of the neural network model.

By encrypting at least a part of model information of a target neural network, relevant information in the model may be concealed, avoiding full exposure of all information on the entire model, thereby improving security performance of the model.

In general, an original model file of a neural network may be a file of a specific structure, including a text document, a graphic file, a file in another form, etc. For example, an original model file may be a file in a binary format. An original model file may be a file in a format defined as needed. For example, for a format defined based on Protocol Buffers (protobuf, a data describing language), the original model file may be a protobuf serialized file. An original model file may be a text file in a format such as JavaScript Object Notation (json). When such an original model file is used at a UE side, model information in a model file of a neural network may be learned straightforwardly through the original model file, leading to poor security. Even an encrypted model with improved security performed may still be cracked. Therefore, after model information is encrypted, an encrypted target neural network may be converted into a code, further improving overall security performance of the neural network model.

That is, by describing a target neural network model using a code, a common file may be converted into an underlying code, increasing difficulty in cracking the file. Moreover, a part of model information of the target neural network may have been encrypted and then converted into a code, making it more difficult to be cracked. The code may be implemented using various program languages. The code may be implemented using various object-oriented program languages. Exemplarily, an object-oriented program language may include, but is not limited to, C++, JAVA, C#, etc.

At a server side, a part of model information in an original model file of a neural network may be encrypted. The encrypted model file may be converted into a model program code describing the neural network. The model program code may be sent to a UE side. Thus, when sending an installation package for installing an APP to a UE, a server may not have to send an original model file (such as a file in a binary format) to the UE, improving efficiency in transmission. In addition, by converting an encrypted model file into a model program code, difficulty in cracking the cipher text is increased greatly, thereby ensuring security of the entire model. On the other hand, when a neural network is deployed off line at a UE side, an original model file may not have to be stored, saving storage space, better meeting a demand for off-line deployment at the UE side. In addition, model information of a neural network may be acquired merely by running a model program code without a need to call an original model file external to the APP, improving efficiency in acquiring information on the neural network, thereby improving overall efficiency in running the APP. Moreover, a server may not have to send a key to a UE side, improving security of transmission, ensuring security of information internal to a model.

An encrypted model file may be acquired by encrypting at least a part of model information in a model file of a target neural network off line at a server side. A program file containing the code may be generated according to the encrypted model file. An installation package may be generated according to the program file.

The server may send the installation package to a UE upon a request by the UE.

The UE may install the program file according to the installation package.

The UE may run the program file to acquire each parameter in the neural network model.

The model information may include node information on each node in the target neural network model. The model information may include a global parameter of the target neural network model.

The node information may include a node identifier of the each node, a node parameter of the each node, etc.

The node parameter may include at least one of a weight parameter of the each node, an input parameter of the each node, an output parameter of the each node, an operational parameter of the each node, etc.

A node identifier may be information for identifying a node, such as a name of the node, a numbering of the node, etc. During encryption of model information, a node identifier may be encrypted, thereby concealing information on an identity of a node, resulting in model information containing an encrypted node identifier. The encrypted node identifier may be the node identifier encrypted using an encryption algorithm.

A node identifier may serve to indicate a node participating in an operation in a neural network. An operation may be convolution, weighting, etc., of an operating node in a neural network.

Encryption may be performed only on a node identifier may be encrypted. Encryption may be performed on at least one of a node identifier or a node parameter. A node parameter may serve to represent a relation between a node and a function of the node. A node parameter may be a weight parameter. A node parameter may be an operational parameter. An operational parameter may describe an operating function or attribute of a node. A node parameter may be an input / output (I / O) parameter of a node. An I / O parameter of a node may reflect a relation of inter-node connection, as well as the structure of a target neural network. Therefore, encryption of a node parameter may ensure security of information internal to a target neural network model.

Encryption may be performed on a global parameter of a target neural network model. A global parameter may describe an input to a target neural network, or an output, a function, an attribute, a structure, etc., of the target neural network. Encryption of a global parameter may improve security of information internal to a target neural network model.

Model information of a model file of a neural network may be encrypted by encrypting a part or all of node information, or by encrypting information relevant to a part or all of global parameters. An encrypted model file may be converted into a model program code describing the neural network. The model program code is to be sent to a UE side. In a practical application, different information may be encrypted as needed. Since there is no fixed requirement as to what content is to be encrypted, efficiency in encryption is improved, further increasing difficulty in cracking the cipher text.

In S102, the model program code describing the target neural network model may be generated according to the encrypted model file as follows.

In S11, a generalized model class associated with the target neural network model may be constructed. At least one generalized data class associated with the model information contained in the target neural network model may be constructed.

In S12, a model object associated with the target neural network model may be created according to the encrypted model file by calling a model constructing function associated with the generalized model class.

In S13, a data object associated with the model information may be created according to the encrypted model file by calling at least one data constructing function associated with the at least one generalized data class.

In S14, the model program code may be generated according to the model object and the data object. The model program code may describe the target neural network model.

The generalized model class may describe various models of target neural networks. In an example, only one universal generalized model class may be defined to describe all models of target neural networks. In another example, multiple distinct generalized model class may be defined according to classification of a target neural network model. For example, one generalized model class may be abstracted from multiple models of target neural networks of a class with a specific attribute, structure, or function, etc. In another example, a generalized model class may have at least one submodel class dedicated to one or more models of target neural networks. Therefore, in S12, for example, a generalized model class and /or a submodel class thereof may be selected corresponding to a type of a target neural network model described by an encrypted model file.

An aforementioned generalized data class may include a generalized class of node data, a generalized class of global data, etc. A generalized class of node data may include generalized classes of node data corresponding respectively to various types of node information. A generalized class of node data may include multiple distinct generalized classes of node data. Each generalized class of node data may correspond respectively to one entry in the node information. In an example, each generalized class of node data may correspond to a combination of multiple entries in the node information.

In other words, one or more node parameters in the node information may be encapsulated in one generalized class of node data. For example, a generalized class of node data may include, but is not limited to, a class of node I / O, a class of node operational parameters, a class of node attributes, a class of node weight parameters, etc.

A generalized class of global data may include only one class of global parameters. A generalized class of global data may include multiple distinct classes of global parameters. One or more global parameters of a model may be encapsulated in one generalized class of global data. For example, a generalized class of global data may include, but is not limited to, a class of model I / O, a class of model functions, a class of model attributes, a class of model structures, etc.

A model object corresponding to a target neural network model may be created based on an aforementioned generalized model class. Multiple data objects corresponding respectively to a global parameter and various entries of node information in a target neural network model may be created based on a generalized data class. Thereby, a model program code describing the target neural network model may be acquired. An original model file may generally describe a graph structure of the neural network model. During generation of a model program code, each encrypted model file may be expressed as a model object of a generalized model class. Multiple data objects of multiple generalized data class may be created by reading information on the graph structure in the encrypted model file. For example, in an example, in S13, information on a parameter and a structure of a model recorded in the encrypted model file may be acquired. Then, at least one generalized data class corresponding to the information on the parameter and the structure of the model may be selected. The data object associated with the information on the parameter and the structure of the model may be created by calling the at least one data constructing function associated with the at least one generalized data class.

In other words, the graph structure of the original model file may be converted, using a code, to be organized by generalized classes of different layers. Thus, information in the original model file may be converted into various objects through various constructing functions. Accordingly, when a neural network is deployed off line at a UE side, the original model file may not have to be stored, so that no additional storage space is occupied, better meeting a demand for off-line deployment at the UE side. In addition, a model program code may be run and model information of a neural network may be acquired through various objects constructed based on the generalized classes of different layers, without a need to call an original model file external to the APP, improving efficiency in acquiring information on the neural network, thereby improving overall efficiency in running the APP.

The method may further include at least one option as follows.

In S21, a model library file may be generated according to the code.

In S22, the APP adapted to executing the target neural network model may be generated by linking the model library file to an executable file.

A library file may be an extended file of an APP generated through a code. An extended file of an APP may not be a complete executable file. A library file may be generated according to the code describing the target neural network. The library file may be linked to an executable file to generate the APP containing a link to the library file. The library file may be called and used at runtime.

A library file may be a static link library. A library file may be a dynamic link library. Both a static link library and a dynamic link library may be extended files independent of an executable file of an APP. A link library may be used in one APP. A link library may be used by different APPs. After a static link library is linked to an executable file, the code of the APP may contain an instruction in the library file straightforwardly, facilitating execution and fast run. On the other hand, only an interface for calling a dynamic link library is linked to an executable file. At runtime, the interface may have to be called to execute an instruction in the library file, although storage space may be saved. Therefore, the specific library file to be used may be decided as needed and is not limited herein.

An encrypted target neural network may be converted into a code. A library file may be generated. An APP linked to the library file may be generated. Therefore, security performance of the target neural network model is improved effectively. In use, data of the target neural network that correspond to a function may be acquired merely by running the APP and calling the function in the library file, facilitating use. The model may be used straightforwardly without being decoded.

In S101, the encrypted model file may be acquired by encrypting the at least a part of the model information in the original model file of the target neural network as follows.

In S31, the encrypted model file may be acquired by performing a mapping operation on the model information according to a preset hash function.

Model information of a target neural network may be encrypted using a hash algorithm. Model information in the target neural network that may be encrypted, including a part or all of the model information, may be acquired. Such parameters may be mapped according to a preset hash function. That is, a hash operation may be performed on the model information to be encrypted, to acquire encrypted model information. Then, an encrypted model file may be acquired. With a hash algorithm, no key may have to be added to model information of a neural network. The model information per se may be mapped. Therefore, with this solution, no key is required for decryption. In addition, with a hash algorithm, a data length will not be increased excessively, reducing waste of storage space due to encryption effectively.

The hash algorithm may be a message digest algorithm MD5. Encryption may be implemented by generating an information / message digest of model information. With an MD5 algorithm, reliability of encryption may be improved, such that each entry of model information may correspond to a unique message digest, i.e., encrypted model information, thereby avoiding a data conflict. In a practical application, another hash algorithm such as a secure hash algorithm sha-2 may be used as need and is not limited herein.

Having received the installation package for installing the APP, the UE may acquire information on the neural network through at least one option as follows.

In option 1, the UE may receive the installation package for installing the APP sent by a server. The installation package may contain the model program code associated with the target neural network model.

The model program code may serve to describe the encrypted model file of the target neural network model. The encrypted model file may be acquired by the server by encrypting at least a part of the model information in the original model file of the target neural network model.

In option 2, the APP may be run. Information on output of the target neural network model may be acquired based on information on input.

The UE may request the target neural network model from the server. Then, the UE may acquire the installation package for installing the APP. The installation package may contain information relevant to the target neural network model. The neural network model may be described by the model program code. Therefore, after the installation package has been installed on the UE, to use the target neural network model, the UE may run the APP. By executing the model program code, the UE may implement the function of the target neural network model.

After the APP, namely the target neural network model, has been provided with specified information on input, the target neural network model may execute the code and acquire output information according to the input information. Therefore, in using the target neural network model, the UE may acquire a result by running the APP straightforwardly without decrypting the encrypted model file thereof. Compared to a model file of a neural network that has to be decrypted with a key, etc., before being used, the solution herein may improve efficiency of use greatly. In addition, when a neural network is deployed off line at a UE side, an original model file may not have to be stored, saving storage space, better meeting a demand for off-line deployment at the UE side. In addition, model information of a neural network may be acquired merely by running a model program code without a need to call an original model file external to the APP, improving efficiency in acquiring information on the neural network, thereby improving overall efficiency in running the APP. Moreover, a server may not have to send a key to a UE side, improving security of transmission, ensuring security of information internal to a model.

In an example, a name of a node in a model may be encrypted using an MD5 algorithm. Then, the encrypted model file may be converted into a C++ code, which may be compiled into a program.

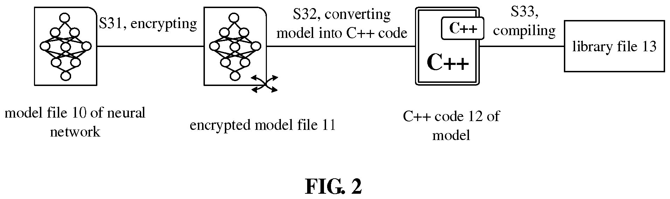

Exemplarily, as shown in FIG. 2, the method may include at least one option as follows.

In S31, an encrypted model file 11 may be acquired by encrypting all node information in a model file 10 of a neural network through MD5.

A neural network model may be a graph structure consisting of nodes. Each node may have information such as a name, a category, input, output, etc. By encrypting such node information through MD5, model information may be concealed, preventing a model structure from being deduced by someone else from information such as a log. In an example, the MD5 encryption algorithm may be replaced with a similar algorithm such as sha-2, sha-256, etc. An sha-256 may provide higher security, but may increase a size of a model file. A person having ordinary skill in the art may select an encryption algorithm as needed by a UE as well as an application scene. In addition, note that FIG. 2 is merely an example of a code adopted herein. The subject disclosure is not limited thereto. Another object-oriented program language, including, but not limited to, JAVA, C#, etc., may also be adopted, for example.

In S32, a C++ code 12 of the model may be acquired by converting the encrypted model file 11 into a C++ code.

The encrypted model file may be a graph structure in a specific format. In converting the encrypted model file into the model program code, the graph structure of the model file may be formed by a number of C++ classes.

For example, each model file may be an object of a Net class. A Net class may include four classes, namely, Tensor, Operator, Argument, and Input / Output Information. A class Tensor may define information on a weight in a model. A class Operator may define node information in a model. A class Argument may define parameter information in a model. A class Input / Output Information may define information on input to the model as well as output of the model.

Information in a model file may be converted into a constructing object in C++ by a function such as CreateNet, CreateTensor, CreateOperator, CreateNetArg, Createlnputlnfo, and CreateOutputInfo. Thus, a model file may be converted into a C++ code.

In S33, the C++ code 12 of the model may be compiled and converted to generate a library file 13, which may be a static model library (libmodel.a).

The C++ code of the model may be compiled into a static library. The static library may be linked to an APP. All data of the model may be acquired by calling a function CreateNet when running the APP.

In this way, security and efficiency may be improved effectively. A node of a model file of a neural network may be encrypted. The encrypted node may be converted into a C++ code. The code may be linked to an APP. Therefore, difficulty in cracking a model may be increased greatly, thereby protecting model data and information effectively. A model encrypted in this way may not have to be decrypted at runtime, thereby improving efficiency effectively.

With the solution, a requirement of deploying a neural network model at a UE side for security, efficiency, and storage may be well met.

In encryption of a neural network model at a UE side, three factors may have to be considered, i.e., security, efficiency in decryption, and storage space. Offline encryption of a neural network model at a UE side according to at least one embodiment herein is advantageous in terms of the three factors, as illustrated below.
1) Security is ensured as follows. A name of a node in a model may be encrypted by MD5. Then, an encrypted model file may be converted into a C++ code. The code may be compiled into a program. Information internal to the model is secured by MD5 encryption at an offline stage. Difficulty in cracking the model is increased greatly by converting the model into the code, thereby ensuring security of the entire model.
2) Efficiency in decryption is ensured as follows. Model information may be acquired merely by calling a model function without decryption at runtime, leading to high efficiency.
3) Storage space is saved as follows. A model may be converted into a C++ code, which in practice barely occupies any more storage space, better meeting a demand for deployment of a neural network model at a UE side.

As shown in FIG. 2, encryption may be performed using an MD5 algorithm and a C++ code may be used to describe a neural network model, the subject disclosure is not limited thereto. Another encryption algorithm that a person having ordinary skill in the art may think of may be adopted to encrypt model information of a neural network. Another object-oriented program language may be adopted to describe the neural network.

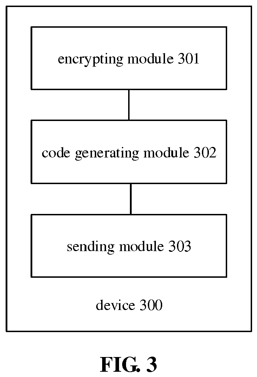

FIG. 3 is a block diagram of a structure of a device for encrypting a neural network model according to an exemplary embodiment. Referring to FIG. 3, the device 300 includes an encrypting module 301, a code generating module 302, and a sending module 303.

The encrypting module 301 is adapted to acquiring an encrypted model file by encrypting at least a part of model information in an original model file describing a target neural network model.

The code generating module 302 is adapted to generating, according to the encrypted model file, a model program code describing the target neural network model.

The sending module 303 is adapted to sending, to a User Equipment (UE) based on a request sent by the UE, an installation package for installing an application (APP). The installation package includes the model program code.

The model information may include node information on each node in the target neural network model and a global parameter of the target neural network model.

The node information may include a node identifier of the each node and a node parameter of the each node.

The node parameter may include at least one of a weight parameter of the each node, an input parameter of the each node, an output parameter of the each node, or an operational parameter of the each node.

The code generating module may include a constructing sub-module, a model object creating sub-module, a data object creating sub-module, and a generating sub-module.

The constructing sub-module may be adapted to constructing a generalized model class associated with the target neural network model, and at least one generalized data class associated with the model information contained in the target neural network model.

The model object creating sub-module may be adapted to creating, according to the encrypted model file, a model object associated with the target neural network model by calling a model constructing function associated with the generalized model class.

The data object creating sub-module may be adapted to creating, according to the encrypted model file, a data object associated with the model information by calling at least one data constructing function associated with the at least one generalized data class.

The generating sub-module may be adapted to generating, according to the model object and the data object, the model program code describing the target neural network model.

The device may further include a library generating module and an APP generating module.

The library generating module may be adapted to generating a model library file according to the model program code.

The APP generating module may be adapted to generating the APP adapted to executing the target neural network model by linking the model library file to an executable file.

The encrypting module may include a mapping sub-module.

The mapping sub-module may be adapted to acquiring the encrypted model file by performing a mapping operation on the at least a part of the model information according to a preset hash function.

Each module of the device according to at least one embodiment herein may execute an operation in a mode elaborated in at least one embodiment of the method herein, which will not be repeated here.

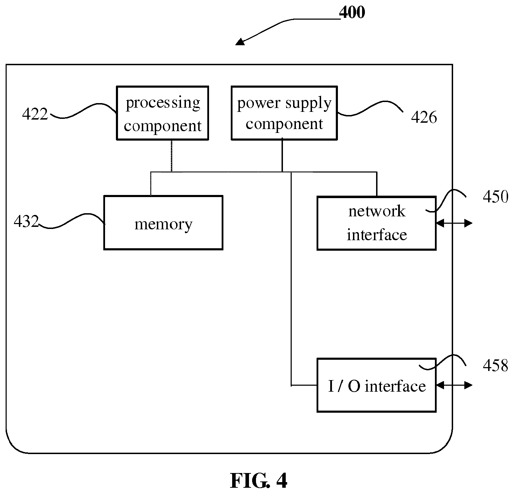

FIG. 4 is a block diagram of a device 400 for acquiring information on output of a neural network model according to an exemplary embodiment. For example, the device 400 may be provided as a server. Referring to FIG. 4, the device 400 may include a processing component 422 (which per se may include one or more processors), and a memory resource indicated by memory 432, adapted to storing instructions, such as an APP, executable by the processing component 422. An APP stored in the memory 432 may include one or more modules each corresponding to a set of instructions. In addition, the processing component 422 may be adapted to executing instructions to execute at least a part of an aforementioned method.

The device 400 may further include a power supply component 426 adapted to managing the power supply of the device 400, a wired or wireless network interface 450 adapted to connecting the device 400 to a network, and an I/O interface 458. The device 400 may operate based on an operating system stored in the memory 432, such as Windows ServerTM, Mac OS XTM, UnixTM, LinuxTM, FreeBSDTM, or the like.

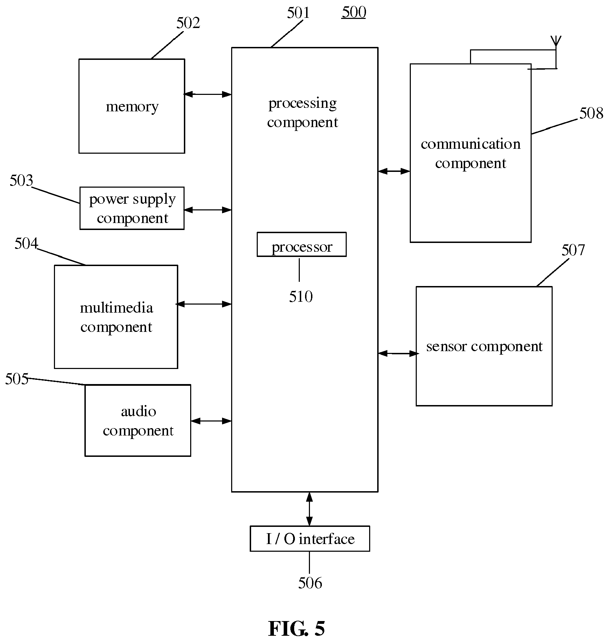

FIG. 5 is a block diagram of a UE 500 according to an exemplary embodiment. The UE 500 is adapted to executing at least a part of any method for encrypting a neural network model according to at least one embodiment herein. For example, the UE 500 may be a mobile phone, a computer, a digital broadcast UE, a messaging device, a gaming console, a tablet, a medical device, exercise equipment, a personal digital assistant, etc.

Referring to FIG. 5, the UE 500 may include at least one of a processing component 501, memory 502, a power supply component 503, a multimedia component 504, an audio component 505, an Input / Output (I / O) interface 506, a sensor component 507, or a communication component 508.

The processing component 501 may generally control an overall operation of the UE 500, such as operations associated with display, a telephone call, data communication, a camera operation, a recording operation, etc. The processing component 501 may include one or more processors 510 to execute instructions so as to complete all or a part of an aforementioned method. In addition, the processing component 501 may include one or more modules to facilitate interaction between the processing component 501 and other components. For example, the processing component 501 may include a multimedia module to facilitate interaction between the multimedia component 504 and the processing component 501.

The memory 502 may be adapted to storing various types of data to support the operation at the UE 500. Examples of such data may include instructions of any application or method adapted to operating on the UE 500, contact data, phonebook data, messages, pictures, videos, etc. The memory 502 may be realized by any type of transitory or non-transitory storage equipment or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, a compact disk, etc.

The power supply component 503 may supply electric power to various components of the UE 500. The power supply component 503 may include a power management system, one or more power sources, and other components related to generating, managing, and distributing electricity for the UE 500.

The multimedia component 504 may include a screen that provides an output interface between the UE 500 and a user. The screen may include a Liquid Crystal Display (LCD), a Touch Panel (TP), etc. If the screen includes a TP, the screen may be realized as a touch screen to receive a signal input by a user. The TP may include one or more touch sensors for sensing touch, slide, and gestures on the TP. The one or more touch sensors not only may sense the boundary of a touch or slide move, but also detect the duration and pressure related to the touch or slide move. The multimedia component 504 may include at least one of a front camera or a rear camera. When the UE 500 is in an operation mode such as a photographing mode or a video mode, at least one of the front camera or the rear camera may receive external multimedia data. Each of the front camera or the rear camera may be a fixed optical lens system or may have a focal length and be capable of optical zooming.

The audio component 505 may be adapted to outputting and / or inputting an audio signal. For example, the audio component 505 may include a microphone (MIC). When the UE 500 is in an operation mode such as a call mode, a recording mode, a voice recognition mode, etc., the MIC may be adapted to receiving an external audio signal. The received audio signal may be further stored in the memory 502 or may be sent via the communication component 508. The audio component 505 may further include a loudspeaker adapted to outputting the audio signal.

The I / O interface 506 may provide an interface between the processing component 501 and a peripheral interface module. Such a peripheral interface module may be a keypad, a click wheel, a button, etc. Such a button may include but is not limited to at least one of a homepage button, a volume button, a start button, or a lock button.

The sensor component 507 may include one or more sensors for assessing various states of the UE 500. For example, the sensor component 507 may detect an on/off state of the UE 500 and relative positioning of components such as the display and the keypad of the UE 500. The sensor component 507 may further detect a change in the position of the UE 500 or of a component of the UE 500, whether there is contact between the UE 500 and a user, the orientation or acceleration / deceleration of the UE 500, a change in the temperature of the UE 500, etc. The sensor component 507 may include a proximity sensor adapted to detecting existence of a nearby object without physical contact. The sensor component 507 may further include an optical sensor such as a Complementary Metal-Oxide-Semiconductor (CMOS) or a Charge-Coupled-Device (CCD) image sensor used in an imaging application. The sensor component 507 may further include an acceleration sensor, a gyroscope sensor, a magnetic sensor, a pressure sensor, a temperature sensor, etc.

The communication component 508 may be adapted to facilitating wired or wireless communication between the UE 500 and other equipment. The UE 500 may access a wireless network based on a communication standard such as Wi-Fi, 2G, 3G..., or a combination thereof. The communication component 508 may broadcast related information or receive a broadcast signal from an external broadcast management system via a broadcast channel. The communication component 508 may include a Near Field Communication (NFC) module for short-range communication. For example, the NFC module may be based on technology such as Radio Frequency Identification (RFID), Infrared Data Association (IrDA), Ultra-Wideband (UWB) technology, Bluetooth (BT), etc.

The UE 500 may be realized by one or more electronic components such as an Application Specific Integrated Circuit (ASIC), a Digital Signal Processor (DSP), a Digital Signal Processing Device (DSPD), a Programmable Logic Device (PLD), a Field Programmable Gate Array (FPGA), a controller, a microcontroller, a microprocessor, etc., to implement an aforementioned method.

A device for encrypting a neural network model according to at least one embodiment hererin includes at least a processor and memory.

The memory stores an instruction executable by the processor.

When executed by the processor, the instruction implements at least a part of a method for encrypting a neural network model. The method includes:
acquiring an encrypted model file by encrypting at least a part of model information in an original model file describing a target neural network model;
generating, according to the encrypted model file, a model program code describing the target neural network model; and
sending, to a User Equipment (UE) based on a request sent by the UE, an installation package for installing an application (APP), the installation package comprising the model program code.

A transitory or non-transitory computer-readable storage medium according to at least one embodiment hererin has stored thereon computer-executable instructions that, when executed by a processor, cause the processor to implement at least a part of a method for encrypting a neural network model. The method includes:
acquiring an encrypted model file by encrypting at least a part of model information in an original model file describing a target neural network model;
generating, according to the encrypted model file, a model program code describing the target neural network model; and
sending, to a User Equipment (UE) based on a request sent by the UE, an installation package for installing an application (APP), the installation package comprising the model program code.

A transitory or non-transitory computer-readable storage medium including instructions, such as memory 502 including instructions, may be provided. The instructions may be executed by the processor 510 of the UE 500 to implement an aforementioned method. For example, the transitory or non-transitory computer-readable storage medium may be Read-Only Memory (ROM), Random Access Memory (RAM), Compact Disc Read-Only Memory (CD-ROM), a magnetic tape, a floppy disk, optical data storage equipment, etc.

A transitory or non-transitory computer-readable storage medium may include instructions which when executed by a processor of a mobile UE, may cause the mobile UE to implement a method for encrypting a neural network model. The method includes at least one option as follows.

An encrypted model parameter is acquired by encrypting at least one model parameter of a target neural network.

A code describing the target neural network is generated according to the encrypted model parameter.

A transitory or non-transitory computer-readable storage medium may include instructions which when executed by a processor of a mobile UE, may cause the mobile UE to implement a method for decrypting a neural network model. The method includes at least one option as follows.

An APP adapted to executing a target neural network model is run. The APP contains a code describing at least one encrypted model parameter of the target neural network.

Data of the target neural network is acquired according to the APP that is run.

The processor may be a Central Processing Unit (CPU), a general purpose processor, a Digital Signal Processor (DSP), an Application Specific Integrated Circuit (ASIC), and/or the like. A general purpose processor may be a microprocessor, any conventional processor, and/or the like. Aforementioned memory may be a Read-Only Memory (ROM), a Random Access Memory (RAM), a flash memory, a hard disk, a solid state disk, and/or the like. A Subscriber Identity Module (SIM) card, also referred to as a smart card, may have to be installed on a digital mobile phone before the phone can be used. Content, such as information on a user of the digital mobile phone, an encryption key, a phonebook of the user, may be stored on the computer chip. An option of the method according to any combination of embodiments herein may be executed by a hardware processor, or by a combination of hardware and software modules in the processor.

Herein by "multiple", it may mean two or more. A term "and /or" may describe an association between associated objects, including three possible relationships. For example, by A and /or B, it may mean that there may be three cases, namely, existence of but A, existence of both A and B, or existence of but B. A slash mark "/" may generally denote an "or" relationship between two associated objects that come respectively before and after the mark per se.

Other embodiments according to the subject disclosure will be apparent to one skilled in the art after he/she has considered the subject disclosure and practiced the invention disclosed herein. The subject application is intended to cover any variation, use, or adaptation of the subject disclosure following the general principle of the subject disclosure and including such departures from the subject disclosure as come within knowledge or customary practice in the art. The subject disclosure and its embodiments are intended to be exemplary only, the invention being defined by the appended claims.

## Claims

1. A method for encrypting a neural network model, comprising:
acquiring (S101) an encrypted model file by encrypting at least a part of model information in an original model file describing a target neural network model;
generating (S 102), according to the encrypted model file, a model program code describing the target neural network model; and
sending (S103), to a User Equipment, UE, based on a request sent by the UE, an installation package for installing an application, APP, the installation package comprising the model program code,
**characterized in that** the acquiring an encrypted model file by encrypting at least a part of model information in an original model file describing a target neural network model comprises:
acquiring the encrypted model file by performing a mapping operation on the at least a part of the model information according to a preset hash function,
wherein the model information comprises node information on each node in the target neural network model and a global parameter of the target neural network model,
wherein the node information comprises a node identifier of the each node and a node parameter of the each node,
wherein the node parameter comprises at least one of a weight parameter of the each node, an input parameter of the each node, an output parameter of the each node, or an operational parameter of the each node.

2. The method of claim 1, wherein the generating, according to the encrypted model file, a model program code describing the target neural network model comprises:
constructing a generalized model class associated with the target neural network model, and at least one generalized data class associated with the model information contained in the target neural network model;
creating, according to the encrypted model file, a model object associated with the target neural network model by calling a model constructing function associated with the generalized model class;
creating, according to the encrypted model file, a data object associated with the model information by calling at least one data constructing function associated with the at least one generalized data class; and
generating, according to the model object and the data object, the model program code describing the target neural network model.

3. The method of any one of the previous claims, further comprising:
generating a model library file according to the model program code; and
generating the APP adapted to executing the target neural network model by linking the model library file to an executable file.

4. A device (300) for encrypting a neural network model, comprising an encrypting module (301), a code generating module (302), and a sending module (303),
wherein the encrypting module (301) is adapted to acquiring an encrypted model file by encrypting at least a part of model information in an original model file describing a target neural network model,
wherein the code generating module (302) is adapted to generating, according to the encrypted model file, a model program code describing the target neural network model,
wherein the sending module (303) is adapted to sending, to a User Equipment, UE, based on a request sent by the UE, an installation package for installing an application, APP, the installation package comprising the model program code,
**characterized in that** the encrypting module (301) comprises a mapping sub-module,
wherein the mapping sub-module is adapted to acquiring the encrypted model file by performing a mapping operation on the at least a part of the model information according to a preset hash function,
wherein the model information comprises node information on each node in the target neural network model and a global parameter of the target neural network model,
wherein the node information comprises a node identifier of the each node and a node parameter of the each node,
wherein the node parameter comprises at least one of a weight parameter of the each node, an input parameter of the each node, an output parameter of the each node, or an operational parameter of the each node.

5. The device (300) of claim 4, wherein the code generating module (302) comprises a constructing sub-module, a model object creating sub-module, a data object creating sub-module, and a generating sub-module,
wherein the constructing sub-module is adapted to constructing a generalized model class associated with the target neural network model, and at least one generalized data class associated with the model information contained in the target neural network model,
wherein the model object creating sub-module is adapted to creating, according to the encrypted model file, a model object associated with the target neural network model by calling a model constructing function associated with the generalized model class,
wherein the data object creating sub-module is adapted to creating, according to the encrypted model file, a data object associated with the model information by calling at least one data constructing function associated with the at least one generalized data class,
wherein the generating sub-module is adapted to generating, according to the model object and the data object, the model program code describing the target neural network model.

6. The device (300) of any one of claims 4 to 5, further comprising a library generating module and an APP generating module,
wherein the library generating module is adapted to generating a model library file according to the model program code,
wherein the APP generating module is adapted to generating the APP adapted to executing the target neural network model by linking the model library file to an executable file.

7. A computer-readable storage medium having stored thereon computer-executable instructions that, when executed by a processor, cause the processor to implement all the steps of the method according to any one of the preceding claims 1 to 3.

8. A computer program comprising instructions for executing all the steps of the method according to any one of the preceding claims 1 to 3 when said program is executed by a computer.

## Patentansprüche

1. Verfahren zum Verschlüsseln eines neuralen Netzwerkmodells, umfassend:
Beschaffen (S101) einer verschlüsselten Modelldatei durch Verschlüsseln mindestens eines Teils von Modellinformationen in einer ursprünglichen Modelldatei, die ein neurales Zielnetzwerkmodell beschreibt;
Erzeugen (S102), gemäß der verschlüsselten Modelldatei, eines Modellprogrammcodes, der das neurale Zielnetzwerkmodell beschreibt; und
Senden (S103), an eine Anwenderausrüstung, UE, basierend auf einer Anfrage, die von der UE gesendet wird, eines Installationspakets zum Installieren einer Anwendung, APP, wobei das Installationspaket den Modellprogrammcode umfasst,
**dadurch gekennzeichnet, dass** das Beschaffen einer verschlüsselten Modelldatei durch Verschlüsseln mindestens eines Teils von Modellinformationen in einer ursprünglichen Modelldatei, die ein neurales Zielnetzwerkmodell beschreibt, umfasst:
Beschaffen der verschlüsselten Modelldatei durch Durchführen einer Zuordnungsoperation an dem mindestens einen Teil der Modellinformationen gemäß einer voreingestellten Hash-Funktion,
wobei die Modellinformationen Knoteninformationen über jeden Knoten in dem neuralen Zielnetzwerkmodell und einen globalen Parameter des neuralen Zielnetzwerkmodells umfassen,
wobei die Knoteninformationen eine Knotenkennung jedes Knotens und einen Knotenparameter jedes Knotens umfassen,
wobei der Knotenparameter mindestens einen von einem Gewichtsparameter jedes Knotens, einem Eingangsparameter jedes Knotens, einem Ausgangsparameter jedes Knotens oder einem operativen Parameter jedes Knotens umfasst.

2. Verfahren nach Anspruch 1, wobei das Erzeugen, gemäß der verschlüsselten Modelldatei, eines Modellprogrammcodes, der das neurale Zielnetzwerkmodell beschreibt, umfasst:
Konstruieren einer verallgemeinerten Modellklasse, die mit dem neuralen Zielnetzwerkmodell verknüpft ist, und mindestens einer verallgemeinerten Datenklasse, die mit den Modellinformationen verknüpft ist, die in dem neuralen Zielnetzwerkmodell enthalten sind;
Erstellen, gemäß der verschlüsselten Modelldatei, eines Modellobjekts, das mit dem neuralen Zielnetzwerkmodell verknüpft ist, indem eine modellkonstruierende Funktion aufgerufen wird, die mit der verallgemeinerten Modellklasse verknüpft ist;
Erstellen, gemäß der verschlüsselten Modelldatei, eines Datenobjekts, das mit den Modellinformationen verknüpft ist, indem mindestens eine datenkonstruierende Funktion aufgerufen wird, die mit der mindestens einen verallgemeinerten Datenklasse verknüpft ist; und
Erzeugen, gemäß dem Modellobjekt und dem Datenobjekt, des Modellprogrammcodes, der das neurale Zielnetzwerkmodell beschreibt.

3. Verfahren nach einem der vorstehenden Ansprüche, weiter umfassend:
Erzeugen einer Modellverzeichnisdatei gemäß dem Modellprogrammcode; und
Erzeugen der APP, die angepasst ist, das neurale Zielnetzwerkmodell auszuführen, indem die Modellverzeichnisdatei mit einer ausführbaren Datei verbunden wird.

4. Vorrichtung (300) zum Verschlüsseln eines neuralen Netzwerkmodells, umfassend ein Verschlüsselungsmodul (301), ein Codeerzeugungsmodul (302) und ein Sendemodul (303),
wobei das Verschlüsselungsmodul (301) angepasst ist, eine verschlüsselte Modelldatei zu beschaffen, indem mindestens ein Teil von Modellinformationen in einer ursprünglichen Modelldatei, die ein neurales Zielnetzwerkmodell beschreibt, verschlüsselt wird,
wobei das Codeerzeugungsmodul (302) angepasst ist, gemäß der verschlüsselten Modelldatei einen Modellprogrammcode zu erzeugen, der das neurale Zielnetzwerkmodell beschreibt,
wobei das Sendemodul (303) angepasst ist, an eine Anwenderausrüstung, UE, basierend auf einer Anfrage, die von der UE gesendet wird, ein Installationspaket zum Installieren einer Anwendung, APP, zu senden, wobei das Installationspaket den Modellprogrammcode umfasst,
**dadurch gekennzeichnet, dass** das Verschlüsselungsmodul (301) ein Zuordnungsteilmodul umfasst,
wobei das Zuordnungsteilmodul angepasst ist, die verschlüsselte Modelldatei zu beschaffen, indem eine Zuordnungsoperation an dem mindestens einen Teil der Modellinformationen gemäß einer voreingestellten Hash-Funktion durchgeführt wird,
wobei die Modellinformationen Knoteninformationen über jeden Knoten in dem neuralen Zielnetzwerkmodell und einen globalen Parameter des neuralen Zielnetzwerkmodells umfassen,
wobei die Knoteninformationen eine Knotenkennung jedes Knotens und einen Knotenparameter jedes Knotens umfassen,
wobei der Knotenparameter mindestens einen von einem Gewichtsparameter jedes Knotens, einem Eingangsparameter jedes Knotens, einem Ausgangsparameter jedes Knotens oder einem operativen Parameter jedes Knotens umfasst.

5. Vorrichtung (300) nach Anspruch 4, wobei das Codeerzeugungsmodul (302) ein Konstruktionsteilmodul, ein Modellobjekterstellungsteilmodul, ein Datenobjekterstellungsteilmodul und ein Erzeugungsteilmodul umfasst,
wobei das Konstruktionsteilmodul angepasst ist, eine verallgemeinerte Modellklasse, die mit dem neuralen Zielnetzwerkmodell verknüpft ist, und mindestens eine verallgemeinerte Datenklasse, die mit den Modellinformationen verknüpft ist, die in dem neuralen Zielnetzwerkmodell enthalten sind, zu konstruieren,
wobei das Modellobjekterstellungsteilmodul angepasst ist, gemäß der verschlüsselten Modelldatei ein Modellobjekt, das mit dem neuralen Zielnetzwerkmodell verknüpft ist, zu erstellen, indem eine Modellkonstruktionsfunktion aufgerufen wird, die mit der verallgemeinerten Modellklasse verknüpft ist,
wobei das Datenobjekterstellungsteilmodul angepasst ist, gemäß der verschlüsselten Modelldatei ein Datenobjekt, das mit den Modellinformationen verknüpft ist, zu erstellen, indem mindestens eine Datenkonstruktionsfunktion aufgerufen wird, die mit der mindestens einen verallgemeinerten Datenklasse verknüpft ist,
wobei das Erzeugungsteilmodul angepasst ist, gemäß dem Modellobjekt und dem Datenobjekt den Modellprogrammcode zu erzeugen, der das neurale Zielnetzwerkmodell beschreibt.

6. Vorrichtung (300) nach einem der Ansprüche 4 bis 5, weiter umfassend ein Verzeichniserzeugungsmodul und ein APP-Erzeugungsmodul,
wobei das Verzeichniserzeugungsmodul angepasst ist, eine Modellverzeichnisdatei gemäß dem Modellprogrammcode zu erzeugen,
wobei das APP-Erzeugungsmodul angepasst ist, die APP, die angepasst ist, das neurale Zielnetzwerkmodell auszuführen, zu erzeugen, indem die Modellverzeichnisdatei mit einer ausführbaren Datei verbunden wird.

7. Computerlesbares Speichermedium, das computerausführbare Anweisungen darauf gespeichert aufweist, die, wenn sie von einem Prozessor ausgeführt werden, den Prozessor veranlassen, all die Schritte des Verfahrens nach einem der vorstehenden Ansprüche 1 bis 3 zu implementieren.

8. Computerprogramm, das Anweisungen zum Ausführen all der Schritte des Verfahrens nach einem der vorstehenden Ansprüche 1 bis 3, wenn das Programm von einem Computer ausgeführt wird, umfasst.

## Revendications

1. Procédé de cryptage d'un modèle de réseau neuronal, comprenant :
l'acquisition (S101) d'un fichier de modèle crypté en cryptant au moins une partie d'informations de modèle dans un fichier de modèle original décrivant un modèle de réseau neuronal cible ;
la génération (S102), en fonction du fichier de modèle crypté, d'un code de programme de modèle décrivant le modèle de réseau neuronal cible ; et
l'envoi (S103), à un équipement utilisateur, UE, sur la base d'une demande envoyée par l'UE, d'un progiciel d'installation pour l'installation d'une application, APP, le progiciel d'installation comprenant le code de programme de modèle,
**caractérisé en ce que** l'acquisition d'un fichier de modèle crypté en cryptant au moins une partie d'informations de modèle dans un fichier de modèle original décrivant un modèle de réseau neuronal cible comprend :
l'acquisition du fichier de modèle crypté en réalisant une opération de mappage sur l'au moins une partie d'informations de modèle selon une fonction de hachage prédéfinie,
dans lequel les informations de modèle comprennent des informations de nœud sur chaque nœud dans le modèle de réseau neuronal cible et un paramètre global du modèle de réseau neuronal cible,
dans lequel les informations de nœud comprennent un identificateur du nœud de chaque nœud et un paramètre de nœud de chaque nœud,
dans lequel le paramètre de nœud comprend au moins un parmi un paramètre de poids de chaque nœud,un paramètre d'entrée du chaque nœud,un paramètre de sortie du chaque nœud ou un paramètre de fonctionnement de chaque nœud.

2. Procédé selon la revendication 1, dans lequel la génération, en fonction du fichier de modèle crypté, d'un code de programme de modèle décrivant le modèle de réseau neuronal cible comprend :
la construction d'une classe de modèle généralisée associée au modèle de réseau neuronal cible, et au moins une classe de données généralisée associée aux informations de modèle contenues dans le modèle de réseau neuronal cible ;
la création, en fonction du fichier de modèle crypté, d'un objet de modèle associé au modèle de réseau neuronal cible en appelant une fonction de construction de modèle associée à la classe de modèle généralisée ;
la création, en fonction du fichier de modèle crypté, d'un objet de données associé aux informations de modèle en appelant au moins une fonction de construction de données associée à l'au moins une classe de données généralisée ; et
la génération, en fonction de l'objet de modèle et de l'objet de données, du code de programme de modèle décrivant le modèle de réseau neuronal cible.

3. Procédé selon l'une quelconque des revendications précédentes, comprenant en outre :
la génération d'un fichier de bibliothèque de modèles en fonction du code de programme de modèle ; et
la génération de l'APP adaptée pour exécuter le modèle de réseau neuronal cible en reliant le fichier de bibliothèque de modèles à un fichier exécutable.

4. Dispositif (300) pour le cryptage d'un modèle de réseau neuronal, comprenant un module de cryptage (301), un module de génération de code (302) et un module d'envoi (303),
dans lequel le module de cryptage (301) est adapté pour acquérir un fichier de modèle crypté en cryptant au moins une partie d'informations de modèle dans un fichier de modèle original décrivant un modèle de réseau neuronal cible,
dans lequel le module de génération de code (302) est adapté pour générer, en fonction du fichier de modèle crypté, un code de programme de modèle décrivant le modèle de réseau neuronal cible,
dans lequel le module d'envoi (303) est adapté pour envoyer, à un équipement utilisateur, UE, sur la base d'une demande envoyée par l'UE, un progiciel d'installation pour l'installation d'une application, APP, le progiciel d'installation comprenant le code de programme de modèle,
**caractérisé en ce que** le module de cryptage (301) comprend un sous-module de mappage,
dans lequel le sous-module de mappage est adapté pour acquérir le fichier de modèle crypté en réalisant une opération de mappage sur l'au moins une partie d'informations de modèle selon une fonction de hachage prédéfinie,
dans lequel les informations de modèle comprennent des informations de nœud sur chaque nœuddans le modèle de réseau neuronal cible et un paramètre global du modèle de réseau neuronal cible,
dans lequel les informations de nœud comprennent un identificateur du nœud de chaque nœud et un paramètre de nœud de chaque nœud,
dans lequel le paramètre de nœud comprend au moins un parmi un paramètre de poids de chaque nœud,un paramètre d'entrée du chaque nœud,un paramètre de sortie du chaque nœud ou un paramètre de fonctionnement de chaque nœud.

5. Dispositif (300) selon la revendication 4, dans lequel le module de génération de code (302) comprend un sous-module de construction, un sous-module de création d'objet de modèle, un sous-module de création d'objet de données et un sous-module de génération,
dans lequel le sous-module de construction est adapté pour construire une classe de modèle généralisée associée au modèle de réseau neuronal cible, et au moins une classe de données généralisée associée aux informations de modèle contenues dans le modèle de réseau neuronal cible,
dans lequel le sous-module de création d'objet de modèle est adapté pour créer, en fonction du fichier de modèle crypté, un objet de modèle associé au modèle de réseau neuronal cible en appelant une fonction de construction de modèle associée à la classe de modèle généralisée,
dans lequel le sous-module de création d'objet de données est adapté pour créer, en fonction du fichier de modèle crypté, un objet de données associé aux informations de modèle en appelant au moins une fonction de construction de données associée à l'au moins une classe de données généralisée,
dans lequel le sous-module de génération est adapté pour générer, en fonction de l'objet de modèle et de l'objet de données, un code de programme de modèle décrivant le modèle de réseau neuronal cible.

6. Dispositif (300) selon l'une quelconque des revendications 4 à 5, comprenant en outre un module de génération de bibliothèque et un module de génération d'APP,
dans lequel le module de génération de bibliothèque est adapté pour générer un fichier de bibliothèque de modèles en fonction du code de programme de modèle,
dans lequel le module de génération d'APP est adapté pour générer l'APP adaptée pour exécuter le modèle de réseau neuronal cible en reliant le fichier de bibliothèque de modèles à un fichier exécutable.

7. Support de stockage lisible par ordinateur présentant des instructions exécutables par ordinateur stockées dessus qui, quand elles sont exécutées par un processeur, amènent le processeur à mettre en œuvre toutes les étapes du procédé selon l'une quelconque des revendications précédentes 1 à 3.

8. Programme informatique comprenant des instructions pour exécuter toutes les étapes du procédé selon l'une quelconque des revendications précédentes 1 à 3 quand ledit programme est exécuté par un ordinateur.
